# FASCICULE DE BREVET EUROPEEN

(11) **EP 0 583 351 B1**
(45) Date de publication et mention de la délivrance du brevet: **27.03.1996**
(21) Numéro de dépôt: 92910997.3
(22) Date de dépôt: 06.05.1992
(51) Int. Cl.: A01G 25/02, A01G 29/00

(54) **GOUTTEUR POUR IRRIGATION AUTO-REGULANT ET ANTI-VIDANGE, AVEC EPINGLE DE FIXATION**
SELBSTREGULIERENDER BEWÄSSERUNGSTROPFER MIT ANTI-AUSLAUFVORRICHTUNG UND BEFESTIGUNGSNADEL
SELF-REGULATING ANTI-DRAIN IRRIGATION DRIP SYSTEM WITH SECURING STAKE

(30) Priorité: 10.05.1991 FR 9105978
(43) Date de publication de la demande: 23.02.1994
(73) Titulaire: Oechsner de Coninck, Hubert, F-13480 Cabries (FR)
(72) Inventeur: Oechsner de Coninck, Hubert, F-13480 Cabries (FR)
(74) Mandataire: Roman, Michel
(86) Numéro de dépôt international: FR9200409
(87) Numéro de publication internationale: WO9220213

(56) Documents cités:
- DE-A- 3 237 862
- FR-A- 2 529 436
- FR-A- 2 595 537
- US-A- 3 887 139

## Description

La présente invention a pour objet un goutteur pour irrigation auto-régulant et anti-vidange, avec épingle de fixation.

Il est destiné à l'irrigation ponctuelle des végétaux selon la technique du goutte à goutte, particulièrement en culture hors sol, et a pour objet d'assurer une parfaite régularité du débit d'arrosage.

Les dispositifs goutte à goutte réalisés à ce jour sont généralement constitués d'un boîtier muni de deux embouts dont l'un reçoit une tubulure raccordée à une conduite principale d'alimentation d'eau sous pression, le second recevant la tubulure de sortie chargée de conduire le liquide d'arrosage au pied des végétaux. Cela nécessite de prévoir des épingles enfoncées dans le substrat de plantation pour maintenir l'extrémité de la tubulure de sortie à proximité du végétal. Les boîtiers connus sont le plus souvent réalisés en matière plastique injectée et comportent, dans le but d'assurer une perte de charge suffisante, un ensemble de chicanes complexes nécessitant des moules coûteux. De plus les systèmes actuels ne permettent pas d'empêcher les conduites d'alimentation de se vider lorsque la pression disparaît, ce qui se produit dans le cas fréquent où la conduite principale est située à un niveau supérieur à celui des boîtiers, et il faut en conséquence adjoindre à l'installation des moyens aptes à réaliser la fonction anti-vidange. En outre les appareils utilisés actuellement ne sont le plus souvent efficaces que pour de faibles variations de la pression d'alimentation, et leur fonctionnemnt est fortement perturbé si la pression s'écarte sensiblement de la plage pour laquelle ils ont été construits.

Le brevet français FR 2 595 537 déposé par Monsieur Roger Mobillon décrit un dispositif d'irrigation goutte à goutte constitué d'un boîtier à diaphragme et une tige creuse pouvant recevoir des produits de traitement des plantes. Cet appareil est prévu spécifiquement pour utiliser de l'eau sans pression, ce qui limite son emploi. En outre la tige creuse est démontable pour pouvoir introduire les produit de traitement, ce qui rend l'ensemble relativement complexe et par conséquent d'un coût de fabrication élevé.

Le dispositif suivant la présente invention supprime tous ces inconvenients. En effet, il comoine trois fonctions en un seul élément, à savoir auto-régulation, anti-vidange et épingle de fixation, ce qui lui permet non seulement d'empêcher la vidange de l'eau de la conduite principale en cas de manque de pression, mais aussi d'assurer un débit d'arrosage régulier quelles que soient les différences de pression subies par le fluide d'alimentation.

Le dispositif comprend un goutteur ayant les caractéristiques de la revendication 1.

Il est constitué par la combinaison d'abord, d'une embase en forme de cuvette dont le fond est pourvu d'une épingle destinée à être enfoncée à proximité du ou des végétaux à arroser et le long de laquelle l'eau ruisselle grâce à un double passage communiquant avec l'intérieur de l'embase, ensuite d'un "chapeau" venant coiffer ladite embase en s'encliquetant sur celle-ci, et dont la partie supérieure est équipée d'un embout de raccordement amont destiné à l'arrivée du fluide, enfin, d'une membrane souple située entre l'embase et le chapeau, assurant la régulation du débit et la fermeture de l'arrivée d'eau en cas d'absence de pression.

Sur les dessins annexés, donnés à titre d'exemple non limitatif d'une des formes de l'invention,
la figure 1 représente le dispositif assemblé, vu latéralement,
la figure 2 est une coupe axiale partielle agrandie du corps du dispositif,
la figure 3 montre, à une échelle différente, l'embase seule vue de dessus, suivant la flèche A de la figure 2,
la figure 4 est une coupe axiale partielle de l'embase, suivant les flèches C-C de la figure 3,
la figure 5 montre, à une échelle différente, le chapeau seul vu de dessous, suivant la flèche a de la figure 2
et la figure 6 est une coupe axiale du chapeau suivant les flèches D-D de la figure 5.

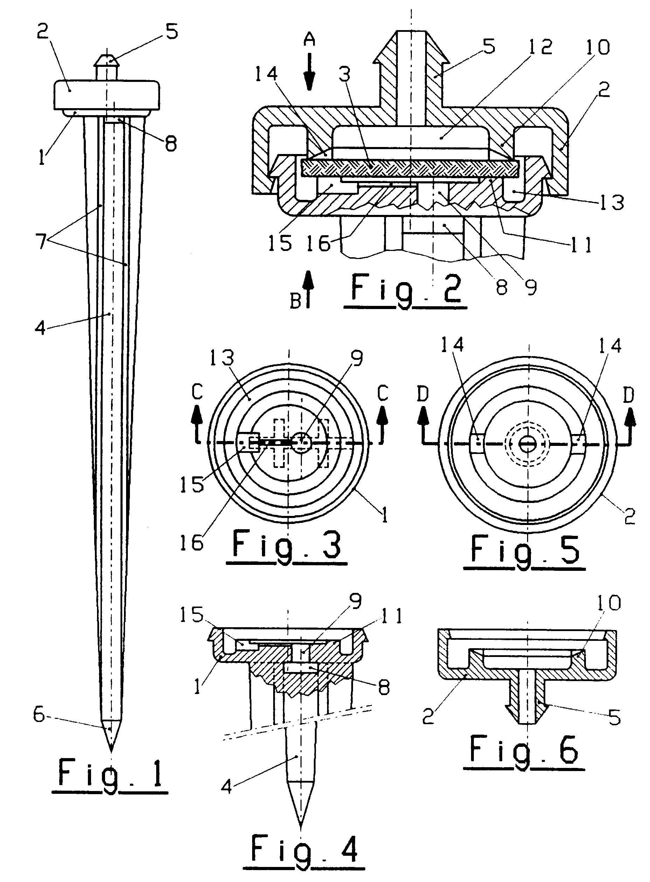

Le dispositif, figure 1 à 6, est constitué d'une embase creuse 1 avec épingle de fixation 4 et d'un chapeau 2 fixé sur elle par encliquetage et pourvu d'un embout de raccordement amont 5, l'embase et le chapeau formant une cavité emprisonnant une membrane souple 3.

L'embase 1 est fabriquée en une seule pièce avec l'épingle 4. Cette dernière comporte une partie inférieure effilée 6 facilitant son enfoncement dans le substrat de plantation, à proximité des végétaux à arroser, et est pourvue de quatre nervures longitudinales 7 délimitant deux canaux verticaux le long desquels ruisselle le liquide d'arrosage grâce à un double passage 8 communiquant avec l'intérieur de l'embase 1 par un trou 9.

La membrane souple 3 est prise entre un épaulement circulaire supérieur 10 solidaire du chapeau 2 et un épaulement circulaire inférieur 11, d'un diamètre plus faible, et solidaire de l'embase 1.

En cas d'absence de pression, la membrane souple est plaquée contre l'épaulement supérieur par l'épaulement inférieur, fermant l'arrivée d'eau et empêchant celle-ci de s'écouler vers l'aval et par conséquent les conduites d'alimentation de se vider.

Lorsque l'eau arrivant par l'embout de raccordement 5 dans la cavité 12 situé à l'intérieur de l'épaulement circulaire supérieur 10 est sous pression, elle déforme le bord de la membrane souple 3, ce qui lui permet de s'écouler dans une rigole annulaire 13 ménagée dans l'embase 1, en passant par une ou plusieures lumières 14 prévues à cet effet dans l'épaulement circulaire supérieur. La déformation du bord de la membrane souple est rendue possible par la différence de diamètre des deux épaulements circulaires 10, 11.

L'épaulement inférieur 11 comporte une découpe 15 permettant le passage de l'eau vers le trou 9 communiquant avec l'extérieur.

Le fond de l'embase 1 est pourvu d'un canal 16 ayant une section transversale en "V", reliant la découpe 15 au trou 9 de sortie de l'eau. Lorsque la pression d'alimentation dépasse une certaine valeur, le centre de la membrane souple 3 est plaquée sur le fond de l'embase 1 ne laissant libre pour le passage de l'eau que ledit canal, dont la section de passage varie sous l'effet de l'enfoncement de la membrane souple, lorsque la pression varie. Cet ensemble de dispositions permet d'assurer, par auto-régulation, un débit constant quel que soit la pression d'alimentation.

Le positionnement des divers éléments constitutifs donne à ce dispositif un maximum d'effets utiles qui n'avaient pas été obtenus à ce jour par des dispositifs similaires.

## Revendications

1. Goutteur pour irrigation auto-régulant et anti-vidange, avec épingle de fixation, destiné à l'irrigation ponctuelle des végétaux selon la technique du goutte à goutte, constitué d'une embase (1) en forme de cuvette équipée d'une épingle de fixation (4) destinée à être enfoncée à proximité du ou des végétaux à arroser, et d'un chapeau (2) venant coiffer ladite embase et dont la partie supérieure est équipée d'un embout de raccordement amont (5) destiné à l'arrivée du fluide d'arrosage, une membrane souple (3) située entre l'embase et le chapeau assurant la régulation du débit,
caractérisé par le fait que la membrane souple (3) est prise entre un épaulement circulaire supérieur (10) solidaire du chapeau (2) et un épaulement circulaire inférieur (11), d'un diamètre plus faible, et solidaire de l'embase (1), de manière à ce que ladite membrane souple ferme l'arrivée d'eau en cas d'absence de pression en étant plaquée contre l'épaulement supérieur par l'épaulement inférieur, mais soit déformée à sa périphérie sous l'effet de la pression d'alimentation de manière à laisser passer l'eau dans une rigole annulaire (13) ménagée dans l'embase (1), en passant par une ou plusieures lumières (14) prévues à cet effet dans l'épaulement circulaire supérieur, ladite rigole annulaire communiquant avec l'extérieur par un trou (9) pratiqué dans le fond de l'embase.

2. Dispositif selon la revendication 1, se caractérisant par le fait que l'épaulement inférieur (11) comporte une découpe (15) permettant le passage de l'eau depuis la rigole annulaire (13) vers le trou (9) de sortie, le fond de l'embase (1) étant pourvu d'un canal (16) ayant une section transversale en "V" et reliant la découpe (15) au trou (9) de sortie de l'eau, conçu de façon que, lorsque la pression d'alimentation varie d'une certaine valeur, le centre de la membrane souple (3) soit plaquée sur le fond de l'embase (1) en ne laissant libre pour le passage de l'eau que ledit canal, et en faisant varier sa section de passage de manière à assurer une auto-régulation du débit.

3. Dispositif selon l'une quelconque des revendications précédentes, se caractérisant par le fait que l'épingle (4) comporte une partie inférieure effilée (6) facilitant son enfoncement dans la terre, et est pourvue de nervures longitudinales (7) délimitant des canaux verticaux le long desquels ruisselle le liquide d'arrosage grâce à un double passage (8) communiquant avec l'intérieur de l'embase (1) par le trou (9).

4. Dispositif selon l'une quelconque des revendications précédentes, se caractérisant par le fait que le chapeau (2) est fixé sur l'embase (3) en s'encliquetant sur celle-ci.

## Claims

1. Self-controlling and anti-draining irrigation drip with fixing peg used for drip irrigation of plants and consisting of a bowl-shaped base (1) equipped with a securing peg (4) for inserting into the ground alongside the plants to be watered and a cap (2) covering the said base, the upper part of which is fitted with a connector for connection to the upstream supply in order to receive the incoming fluid to be distributed, a flexible membrane (3) positioned between the base and the cap for controlling the flow,
characterized in that the flexible membrane (3) is held between an upper circular shoulder (10) forming an integral part of the cap (2) and a lower circular shoulder (11) with a smaller diameter forming an integral part of the base (1) so that the said flexible membrane closes the water inlet in the absence of pressure by being forced against the upper shoulder by the lower shoulder, but being deformed at its perimeter under the effect of the supply pressure so as to allow the water to pass in an annular channel (13) arranged in the base (1) by passing through one or several openings (14) provided to this effect in the upper circular shoulder, the said annular channel connecting with the outside via a hole (9) arranged in the bottom of the base.

2. Device as per claim 1 characterized in that the lower shoulder (11) has a cut out (15) allowing the passage of water from the annular channel (13) towards the discharge hole (9), the bottom of the base (1) being fitted with a V section channel (16) connecting the cut-out (15) to the discharge hole (9) designed so that when the feed pressure varies from a given value, the centre of the flexible membrane (3) is forced onto the bottom of the base (1) only leaving water to pass via the said channel, and by varying its section so that the flow is self-regulating.

3. Device as per any one of the aforesaid claims characterized in that the peg (4) comprises a pointed end (6) to allow its insertion into the ground and is longitudinally ribbed (7) thereby establishing vertical channels along which the liquid flows thanks to a double passage (8) communicating with the inside of the base (1) via the hole (9).

4. Device as per any one of the aforesaid claims characterized in that the cap (2) clips onto the base (3).

## Patentansprüche

1. Tropfsystem für selbstregulierende und auslaufhemmende Bewässerung, mit Befestigungsnadel, bestimmt für die punktuelle Bewässerung von Pflanzen gemäß der Tropftechnik, bestehend aus einem Ansatz (1) in Form einer Schale, ausgerüstet mit einer Befestigungsnadel (4) dazu bestimmt, in der Nähe der zu bewässernden Pflanze bzw. Pflanzen in die Erde gedrückt zu werden, und einem Deckel (2), welcher den Ansatz (1) abdeckt und dessen oberer Teil mit einem Anschlußstutzen (5) versehen ist für den Einlauf der Bewässerungsflüssigkeit, einer elastischen Membrane (3) zwischen Ansatz und Deckel zur Gewährleistung der Durchsatzregulierung, dadurch gekennzeichnet, daß die elastische Membrane (3) zwischen einer kreisförmigen mit dem Deckel (2) schlüssigen oberen Schulter (10) und einer kreisförmigen unteren Schulter (11) eines kleineren Durchmessers und schlüssig mit den Ansatz (1) gehalten wird, auf eine Weise, daß die besagte elastische Membrane mittels Andrücken an die obere Schulter durch die untere Schulter den Wassereinlauf schließt wenn kein Druck vorhanden ist, aber unter Einwirkung des Versorgungsdrucks an ihrem Rand verformt wird, um das Wasser in eine kreisförmige im Ansatz (1) angebrachte Rinne (13) durchzulassen, wobei das Wasser durch eine oder mehrere für diesen Zweck in der oberen kreisförmigen Schulter vorgesehenen Öffnungen fließt, und die kreisförmige Rinne durch ein im Boden des Ansatzes angebrachtes Loch (9) nach Außen Durchgang hat.

2. Vorrichtung gemäß Anspruch 1, dadurch gekennzeichnet, daß die untere Schulter (11) einen Ausschnitt (15) hat, welcher den Durchfluß des Wassers von der kreisförmigen Rinne (13) zu dem Ausflußloch (9) ermöglicht, wobei der Boden des Ansatzes (1) mit einem Kanal mit V-förmigem Querschnitt versehen ist, der den Ausschnitt (15) mit dem Wasserausflußloch (9) verbindet und so ausgelegt ist, daß wenn der Versorgungsdruck um einen bestimmten Wert schwankt, die Mitte der elastischen Membrane (3) auf den Boden des Ansatzes (1) gedrückt wird, für den Durchfluß des Wassers nur der besagte Kanal frei bleibt und sein Durchflußquerschnitt so variiert wird, daß eine Selbstregulierung des Durchsatzes gewährleistet ist.

3. Vorrichtung gemäß irgendeinem der vorhergehenden Ansprüche, dadurch gekennzeichnet, daß die Nadel (4) in ihrem unteren Teil eine Spitze (6) besitzt, um ihr Eindrücken in die Erde zu erleichtern und mit Längsrippen (7) versehen ist, welche die vertikalen Kanäle begrenzen, an denen die Bewässerungsflüssigkeit mittels einer doppelten Passage (8), die mit der Innenseite des Ansatzes (1) durch das Loch (9) verbunden ist, entlang rieselt.

4. Vorrichtung gemäß irgendeinem der vorhergehenden Ansprüche, dadurch gekennzeichnet, daß der Deckel (2) auf dem Ansatz (1) durch Anklipsen befestigt wird.
